# EUROPÄISCHE PATENTSCHRIFT

(11) **EP 0 934 839 B1**
(45) Veröffentlichungstag und Bekanntmachung des Hinweises auf die Patenterteilung: **03.05.2006**
(21) Anmeldenummer: 99102240.1
(22) Anmeldetag: 04.02.1999
(51) Int. Cl.: B60G 3/20, B60G 15/06

(54) **Einzelradaufhängung für nichtgelenkte Räder von Kraftfahrzeugen**
Independent suspension for non-steered wheels of motor vehicles
Suspension indépendante pour roues non directrices de véhicules à moteur

(30) Priorität: 06.02.1998 DE 19804699
(43) Veröffentlichungstag der Anmeldung: 11.08.1999
(73) Patentinhaber: Bayerische Motoren Werke Aktiengesellschaft, 80788 München (DE)
(72) Erfinder: Scheller, Franz-Xaver, 81379 München (DE)

(56) Entgegenhaltungen:
- DE-A- 19 509 470
- US-A- 3 039 788
- US-A- 3 193 304
- KOSAK W ET AL: "DIE NEUE ZENTRAL-LENKER-HINTERACHSE DER BMW 3ER-BAUREIHE" ATZ AUTOMOBILTECHNISCHE ZEITSCHRIFT, FRANCKH'SCHE VERLAGSHANDLUNG. STUTTGART, DE, Bd. 93, Nr. 5, 1. Mai 1991 (1991-05-01), Seiten 274-277,280, XP000243772 ISSN: 0001-2785
- AUTOMOTIVE ENGINEER, MECHANICAL ENGINEERING PUBL.LTD. BURY ST.EDMUNDS, GB, Bd. 15, Nr. 6, 1. Dezember 1990 (1990-12-01), Seiten 48-52, XP000165911 ISSN: 0307-6490

## Beschreibung

Die Erfindung betrifft eine Einzelradaufhängung für nichtgelenkte Räder von Kraftfahrzeugen, insbesondere von Personenkraftwagen, gemäß dem Oberbegriff des Anspruchs 1.

Aus der ATZ 93 (1991), Seiten 274 bis 280 ist bereits eine gattungsbildende Einzelradaufhängung für nichtgelenkte Räder von Kraftfahrzeugen bekannt. Bei dieser Einzelradaufhängung sind zwei übereinander angeordnete Querlenker jeweils mit ihrem einen Ende an einem Radträger angelenkt. Die aufbauseitigen Enden der Querlenker sind in Fahrzeuglängsrichtung nach vome, d. h. zum vorderen Ende des Kraftfahrzeuges, gerichtet und gelenkig an einem Fahrzeugaufbau oder einem Fahrschemel oder dergleichen angeordnet. Ein Ende eines Längslenkers ist als ein Radträger ausgebildet. Das dazu gegenüberliegende Ende des Längslenkers ist über ein elastisches Lager am Fahrzeugaufbau oder dergleichen angelenkt. Auf dem oberen Querlenker stützt sich ein unteres Ende einer Feder ab. Der Stoßdämpfer ist hinter der Radmitte und hinter einer Antriebswelle in Richtung Fahrzeugheck angeordnet. Dadurch ergibt sich eine Übersetzung i des Stoßdämpfers zu i > 1, dies ist zwar hinsichtlich des Ansprechverhaltens des Stoßdämpfers vorteilhaft, eine solche Übersetzung wirkt sich aber negativ auf die Baulänge des Stoßdämpfers aus. Daher benötigt der Stoßdämpfer relativ viel Bauraum, so daß insbesondere die Kofferraumgröße durch jeweils einen entsprechend groß bauenden Dämpferdom verringert sein kann.

Aufgabe der Erfindung ist es, eine Einzelradaufhängung für nichtgelenkte Räder von Kraftfahrzeugen zu schaffen, die bei einem hohen Fahrkomfort relativ wenig Bauraum erfordert.

Diese Aufgabe wird durch die Merkmale des Anspruchs 1 gelöst.

Bei der erfindungsgemäßen Einzelradaufhängung ist das untere Ende des Stoßdämpfers in Fahrzeuglängsrichtung zum vorderen Ende des Kraftfahrzeuges hin vor der Radmitte und vor einer Antriebswelle angeordnet, indem der Stoßdämpfer durch eine im oberen Querlenker ausgebildete Öffnung und durch die Feder hindurchgeführt ist. Dadurch ergibt sich eine Änderung der Übersetzung i des Stoßdämpfers in der Weise, daß i < 1 wird. Durch diese Übersetzungsänderung wird bei gleichem Radhub wie bei der oben beschriebenen, bekannten Einzelradaufhängung die Einbaulänge des Stoßdämpfers deutlich kürzer, so daß ein in den Kofferraum ragender Dämpferdom niedriger ist und sich somit vorteilhafterweise die Durchladebreite und das Kofferraumvolumen des mit der erfindungsgemäßen Einzelradaufhängung versehenen Kraftfahrzeuges erhöht.

In einer vorteilhaften Ausführungsform beträgt die Übersetzung i des Stoßdämpfers i = ca. 0,7. Die Durchladebreite eines Kofferraumes erhöht sich dann je nach Ausführungsform der Karosseriestruktur um ca. 10%. Die Vergrößerung des Kofferraumvolumens bei der Verwendung der erfindungsgemäßen Einzelradaufhängung liegt bei ca. 5%.

Eine Ausführungsform der Erfindung wird nachstehend anhand der Zeichnungen beispielshalber beschrieben. Dabei zeigen:
- Fig. 1: eine Ansicht von der Seite einer Einzelradaufhängung,
- Fig. 2: eine Ansicht von oben der in der Fig. 1 dargestellten Einzelradaufhängung und
- Fig. 3: eine Ansicht von hinten der in den Fig. 1 und 2 dargestellten Einzelradaufhängung.

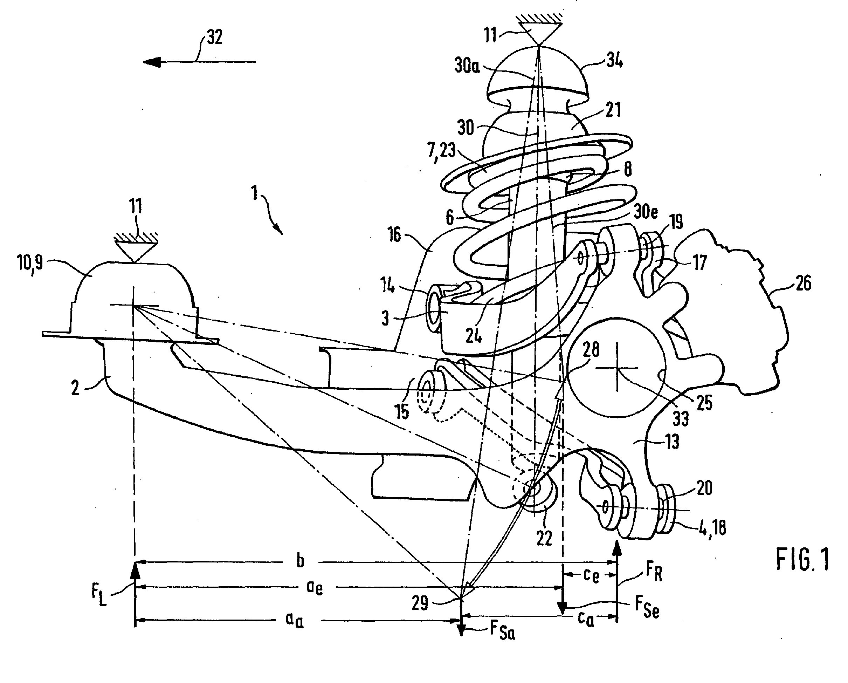

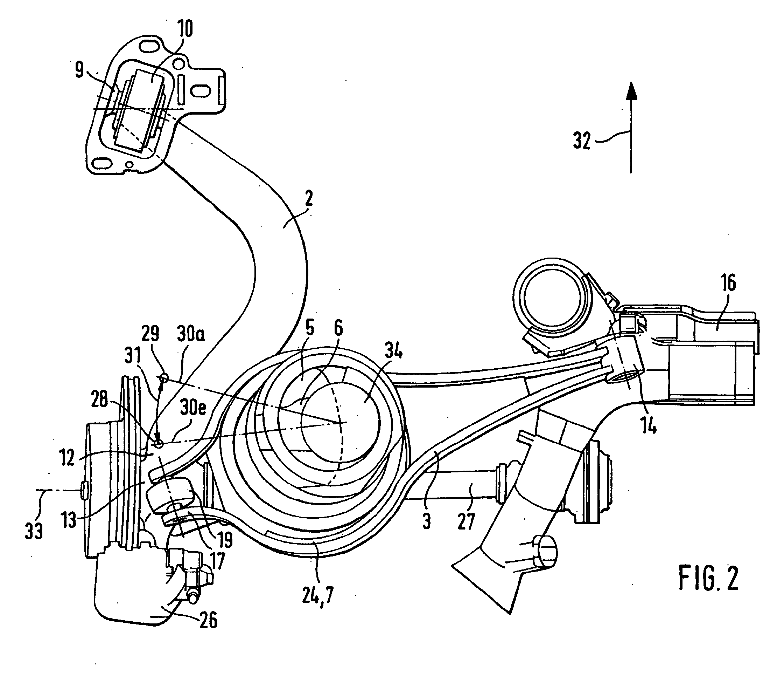

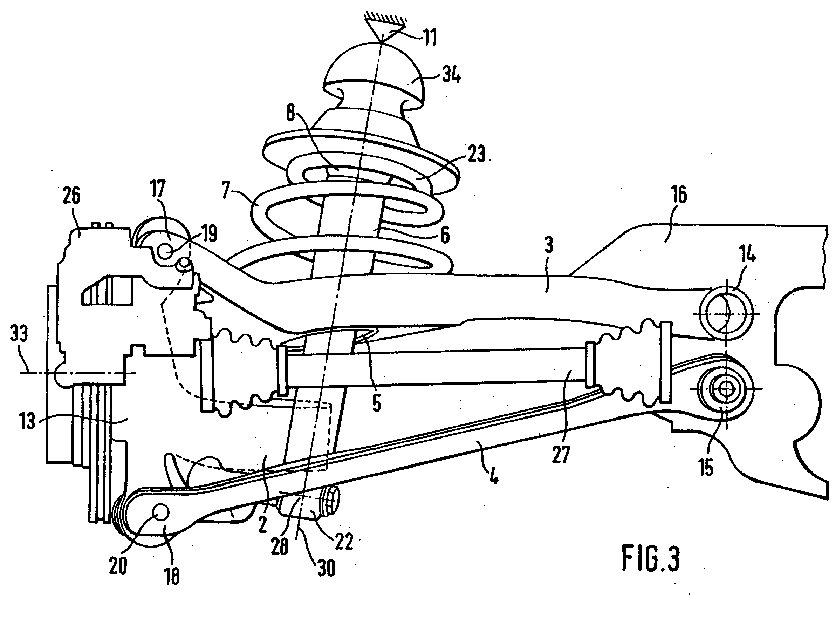

Die Fig. 1 zeigt eine Einzelradaufhängung 1 für nicht dargestellte, nicht gelenkte Räder eines Kraftfahrzeuges. Die Einzelradaufhängung 1 weist einen Längslenker 2, einen oberen und einen unteren Querlenker 3 und 4 auf. In dem oberen Querlenker 3 ist eine in den Fig. 2 und 3 ersichtliche Öffnung 5 ausgebildet, durch die ein Stoßdämpfer 6 hindurchgeführt ist. Eine Feder 7 ist zwischen einem Blechtopf 34 oder dergleichen und dem oberen Querlenker 3 angeordnet. Der Blechtopf 34 ist an einer Karosserie 11 befestigt.

Die Einzelradaufhängung 1 stimmt bis auf die Veränderung der Anordnung des Stoßdämpfers 6 mit der in der ATZ 93 (1991), Seiten 274 bis 280 beschriebenen "Zentral-Lenker-Hinterachse" überein. Zur Vermeidung von Wiederholungen wird auf die dort beschriebenen Merkmale verwiesen.

Der Längslenker 2 ist mit seinem einen Ende 9 elastisch über ein Lager 10 an der Karosserie 11 angebunden. Das dazu gegenüberliegende Ende 12 des Längslenkers 2 ist als ein Radträger 13 ausgebildet. Die übereinander angeordneten Querlenker 3 und 4 sind mit ihrem jeweiligen einen Ende 14, 15 an einem nicht näher dargestellten Fahrschemel 16 über Gummilager elastisch angelenkt. Die dazu gegenüberliegenden Enden 17, 18 der Querlenker 3, 4 sind über Gelenke 19, 20 mit dem Radträger 13 verbunden. Das obere Ende 8 des Stoßdämpfers 6 ist innerhalb des Blechtopfes 34 angeordnet und über ein elastisches Lager 21, insbesondere ein Gummilager, mit dem Blechtopf 34 verbunden. Ein unteres Ende 22 des Stoßdämpfers 6 ist am Längslenker 2 so angelenkt, daß das untere Ende 22 im Vergleich zum oberen Ende 8 des Stoßdämpfers 6 nach vorne in Fahrzeuglängsrichtung 32 verschoben ist und der Stoßdämpfer 6 eine entsprechende Neigung aufweist. Die Feder 7 stützt sich mit ihrem oberen Ende 23 an dem Blechtopf 34 ab. Ein unteres Ende 24 der Feder 7 ist auf dem oberen Querlenker 3 angeordnet.

In der Fig. 1 sind ferner einzelne, in vertikaler Richtung wirkende Kräfte F_{L}, F_{Se}, F_{Sa} und F_{R} sowie einzelne Abstände bzw. Hebelarme aₑ, aₐ, b, cₑ und cₐ zwischen den genannten Kräften eingetragen. Die Fußnoten e oder a betreffen jeweils den eingefederten oder ausgefederten Zustand 28, 29 des unteren Endes 22 des Stoßdämpfers 6. Entsprechend ist die Mittellinie 30 des Stoßdämpfers 6 mit den Fußnoten e und a versehen. In der Fig. 1 zeigt der in durchgezogenen Linien dargestellte Stoßdämpfer 6 und die ohne Fußnote versehene Mittellinie 30 eine Einfederungslage der Radaufhängung 1, die zwischen dem vollständig eingefederten und ausgefederten Zustand liegt.

F_{L} ist eine durch das Lager 11 aufzunehmende Kraft. F_{Se} und F_{Sa} ist jeweils eine auf das untere Ende 22 des Stoßdämpfers 6 im eingefederten bzw. ausgefederten Zustand 28, 29 wirkende Kraft. F_{R} bezeichnet eine in der Radmitte 33 durch den Radträger 13 abgestützte Kraft.

Zwischen dem Längslenker-Lager 10 und der Radmitte 33 besteht ein vom Einfederungszustand der Radaufhängung 1 abhängiger Abstand b. Ein Abstand a zwischen dem unteren Ende 22 des Stoßdämpfers 6 schwankt zwischen einem Abstand aₑ im eingefederten Zustand 28 des Stoßdämpfers 6 und einem Abstand aₐ im ausgefederten Zustand 29 des Stoßdämpfers 6. Entsprechend schwankt ein Abstand c zwischen den beiden Kräften F_{R} und F_{Se} sowie F_{Sa}, der sich aus der Differenz c = b - a ergibt, zwischen einem Wert cₑ und cₐ.

Für den eingefederten Zustand 28 des Stoßdämpfers 6 ergibt sich durch die Verlagerung des Stoßdämpfers 6 in Richtung zu einem nicht dargestellten vorderen Ende des Kraftfahrzeuges näherungsweise eine Übersetzung i = aₑ/b < 1.

Wie insbesondere aus den Fig. 1 und 3 hervorgeht, ist die Feder 7 aufgrund des Raumbedarfs des Stoßdämpfers 6 beim Durchfedern als Kegelfeder ausgelegt. Aus der Fig. 1 ist ferner eine Durchgangsöffnung 25 in Höhe einer Radmitte 33 im Radträger 13 für eine in den Fig. 2 und 3 dargestellte Antriebswelle 27 erkennbar. Zusätzlich ist in der Fig. 1 die Lage des Bremssattels 26 ersichtlich.

Aus der Draufsicht der Fig. 2 ist die zur Abstützung des unteren Endes 24 der Feder 7 verbreiterte Oberfläche des oberen Querlenkers 3 erkennbar. Die in dem oberen Querlenker 3 ausgebildete Öffnung 5 ist entsprechend dem Raumbedarf des Stoßdämpfers 6 beim Durchfedem länglich ausgebildet, wie dies zum Teil durch die punktierte Linie in der Fig. 2 gezeigt ist. In der Fig. 2 ist die Lage des Stoßdämpfers 6 in der eingefederten Stellung 28 und in der ausgefederten Stellung 29 anhand jeweils einer Mittellinie 30e und 30a des Stoßdämpfers 6 und eines Doppelpfeiles 31 dargestellt.

Aus der Fig. 3 ist die Anordnung der Querlenker 3 und 4 übereinander ersichtlich. In punktierten Linien ist die Quererstreckung des Längslenkers 2 gezeigt. Ferner geht aus der Fig. 3 hervor, daß der Stoßdämpfer 6 relativ kurz baut. Die Radaufhängung 1 befindet sich in einem Einfederungszustand, der zwischen dem vollständig eingefederten und ausgefederten Zustand liegt.

## Patentansprüche

1. Einzelradaufhängung für nichtgelenkte Räder eines Kraftfahrzeuges, mit einem Radträger (13),an dem zwei übereinander angeordnete Querlenker (3,4) angelenkt sind, deren aufbauseitige Enden (14,15) in Fahrzeuglängsrichtung nach vorne gerichtet sind und die jeweils an einem Fahrzeugaufbau oder einem Fahrschemel (16) über ein Gelenk (19,20) angeordnet sind, mit einem Längslenker (2), bei dem das eine Ende (12) als Radträger (13) ausgebildet ist und das andere Ende (9) uber ein elastisches Lager (10) am Fahrzeugaufbau oder dergleichen angelenkt ist, wobei sich auf dem oberen Querlenker (3) ein unteres Ende (24) einer Feder (7) abstützt, und mit einem Stoßdämpfer (6),
**dadurch gekennzeichnet, daß** der obere Querlenker (3) eine Durchgangsöffnung (5) aufweist, daß durch die Feder (7) und die Durchgangsöffnung (5) des oberen Querlenkers (3) der Stoßdämpfer (6) hindurchgeführt ist, dessen unteres Ende (22) in Fahrzeuglängsrichtung (32) zwischen einer Radmitte (33) und dem aufbauseitigen Ende (9) des Längslenkers (2) angelenkt ist, daß die Form und Größe der Durchgangsöffnung (5) und der Feder (7) dem Raumbedarf des Stoßdämpfers (6) beim Ein- und Ausfedern angepaßt ist.

2. Einzelradaufhängung nach Anspruch 1,
**dadurch gekennzeichnet, daß** das untere Ende (22) des jeweiligen Stoßdämpfers (6) vor je einer Antriebswelle (27) angeordnet ist.

3. Einzelradaufhängung nach den Ansprüchen 1 oder 2,
**dadurch gekennzeichnet, daß** die Feder (7) kegelförmig ist und daß das untere Ende (24) der Feder (7) einen größeren Durchmesser als die Durchgangsöffnung (5) aufweist.

4. Einzelradaufhängung nach einem der vorhergehenden Ansprüche,
**dadurch gekennzeichnet, daß** die Übersetzung i des Stoßdämpfers (6) i < 1 ist.

## Claims

1. An independent wheel suspension for non-steered wheels of a motor vehicle, comprising a wheelmount (13), on which two transverse links (3, 4) arranged one above the other are articulated, the ends (14, 15) of which on the body side are directed to the front in the longitudinal direction of the vehicle and which are arranged, in each case, on a vehicle body or a suspension subframe (16) via a joint (19, 20), comprising a longitudinal link (2), in which the one end (12) is configured as a wheelmount (13) and the other end (9) is articulated to the vehicle body or the like via an elastic bearing (10), wherein a lower end (24) of a spring (7) is supported on the upper transverse link (3), and comprising a shock absorber (6),
**characterised in that** the upper transverse link (3) has a through-aperture (5), **in that** the shock absorber (6) is guided through the spring (7) and the through-aperture (5) of the upper transverse link (3), the lower end (22) of said shock absorber being articulated in the longitudinal direction (32) of the vehicle between a wheel centre (33) and the end (9) on the body side of the longitudinal link (2), and **in that** the shape and size of the through-aperture (5) and the spring (7) are adapted to the space requirement of the shock absorber (6) when bottoming and topping out.

2. An independent wheel suspension according to claim 1,
**characterised in that** the lower end (22) of the respective shock absorber (6) is arranged upstream from a drive shaft (27) in each case.

3. An independent wheel suspension according to claims 1 or 2,
**characterised in that** the spring (7) is conical and **in that** the lower end (24) of the spring (7) has a larger diameter than the through-aperture (5).

4. An independent wheel suspension according to any one of the preceding claims, **characterised in that** the transmission ratio i of the shock absorber (6) is i < 1.

## Revendications

1. Suspension à roues indépendantes pour roues non directrices d'un véhicule à moteur comportant un support de roue (13), sur lequel sont articulés deux bras oscillants transversaux (3, 4) disposés l'un au-dessus de l'autre, dont les extrémités (14, 15) côté carrosserie dirigées vers l'avant sont montées chacune sur une carrosserie de véhicule ou un cadre auxiliaire (16) par l'intermédiaire d'une articulation (19, 20), un bras oscillant longitudinal (2) dont l'une (12) des extrémités est en forme de support de roue (13) et l'autre extrémité (9) est articulée sur la carrosserie du véhicule ou une structure similaire par l'intermédiaire d'un palier élastique (10), une extrémité inférieure (24) d'un ressort (7) reposant sur le bras oscillant transversal supérieur (3), et un pare-chocs (6),
**caractérisée en ce que**
le bras oscillant transversal supérieur (3) présente une ouverture de passage (5), le ressort (7) et l'ouverture de passage (5) du bras oscillant transversal supérieur (3) sont traversés par le pare-chocs (6) dont l'extrémité inférieure (22) est articulée, dans le sens longitudinal du véhicule (32) entre un centre de roue (33) et l'extrémité (9), côté carrosserie, du bras oscillant longitudinal (2), et la forme et la taille de l'ouverture de passage (5) et du ressort (7) sont adaptées à la place nécessaire au pare-chocs (6) lors de la compression et du rebond.

2. Suspension à roues indépendantes selon la revendication 1,
**caractérisée en ce que**
l'extrémité inférieure (22) du pare-chocs (6) respectif est disposée devant un essieu moteur (27).

3. Suspension à roues indépendantes selon les revendications 1 ou 2,
**caractérisée en ce que**
le ressort (7) est de forme conique et l'extrémité inférieure (24) du ressort (7) a un diamètre plus grand que l'ouverture de passage (5).

4. Suspension à roues indépendantes selon l'une quelconque des revendications précédentes,
**caractérisée en ce que**
la démultiplication i du pare-chocs (6) est inférieure à 1.
